# EUROPÄISCHE PATENTSCHRIFT

(11) **EP 2 195 697 B1**
(45) Veröffentlichungstag und Bekanntmachung des Hinweises auf die Patenterteilung: **11.11.2015**
(21) Anmeldenummer: 08802308.0
(22) Anmeldetag: 18.09.2008
(51) Int. Cl.: G02B 21/00, G02B 21/36, G02B 21/06

(54) **VERFAHREN ZUR UNTERSUCHUNG EINER PROBE**
METHOD FOR ANALYSING A SAMPLE
PROCÉDÉ POUR L'ANALYSE D'UN ÉCHANTILLON

(30) Priorität: 28.09.2007 DE 102007047461
(43) Veröffentlichungstag der Anmeldung: 16.06.2010
(73) Patentinhaber: Carl Zeiss Microscopy GmbH, 07745 Jena (DE)
(72) Erfinder: POWER, Christopher, Cheshire, SK8 6AR (GB); LIPPERT, Helmut, 07745 Jena (DE); DIETRICH, Christian, 07743 Jena (DE); RADT, Benno, 07743 Jena (DE)
(74) Vertreter: Hampe, Holger
(86) Internationale Anmeldenummer: PCT/EP2008/007784
(87) Internationale Veröffentlichungsnummer: WO 2009/043485

(56) Entgegenhaltungen:
- WO-A-2005/050558
- WO-A-2007/065711
- US-A1- 2006 023 219
- US-A1- 2007 109 633

## Beschreibung

Die Erfindung betrifft ein verfahren zur Untersuchung einer Probe, bei dem die Probe um eine Rotationsachse rotierbar und verschiebbar gelagert wird. Die Probe wird über eine erste Beleuchtungseinrichtung mit einem im wesentlichen ebenen Lichtblatt im wesentlichen parallel zur Rotationsachse beleuchtet, von der Probe abgestrahltes Licht wird über ein Abbildungsobjektiv mit einer optischen Achse, die die Ebene des Lichtblatts in einem von Null verschiedenen Winkel, bevorzugt senkrecht schneidet, auf eine Detektierungseinrichtung als Schnittbild abgebildet. Dabei werden mehrere Schnittbilder der Probe aufgenommen und mindestens für einen Teil der Schnittbilder wird die Probe zwischen den Aufnahmen gedreht und/oder im Raum verschoben. Die aufgenommenen Schnittbilder werden anschließend registriert, d.h. mittels einer Transformation in ein gemeinsames Koordinatensystem überführt. Anschließend werden sie zu einem ersten Datensatz von räumlichen Bilddaten der Probe fusioniert.

Eine optische Anordnung zur Untersuchung einer Probe gemäss dem erfindungsgemässen Verfahren umfaßt u.a. eine Probenhalterung zur Aufnahme der Probe, wobei die Probe und/oder die Probenhalterung um eine Rotationsachse rotierbar und verschiebbar gelagert ist. Sie umfaßt außerdem eine erste Beleuchtungseinrichtung, die wiederum eine erste Beleuchtungslichtquelle und einen ersten Beleuchtungsstrahlengang zur Beleuchtung der Probe mit einem Lichtblatt umfaßt. Darüberhinaus umfaßt die Anordnung eine Detektierungseinrichtung zur Detektierung von Licht, das von der Probe abgestrahlt wird, sowie eine Abbildungsoptik, die die Probe über ein Abbildungsobjektiv in einem Abbildungsstrahlengang mindestens teilweise auf die Detektierungseinrichtung abbildet, wobei Licht, das aufgrund der Beleuchtung der Probe mit der ersten Beleuchtungseinrichtung detektiert wird, als Schnittbild detektiert wird, und wobei das Lichtblatt im Fokus des Abbildungsobjektivs im wesentlichen eben ist, und wobei das Abbildungsobjektiv eine optische Achse aufweist, die die Ebene des Lichtblattes in einem von Null verschiedenen Winkel, bevorzugt senkrecht, schneidet. Schließlich umfaßt die Anordnung auch eine Steuereinheit und eine Auswerteeinheit, wobei die Steuereinheit zu einer Steuerung derart ausgelegt ist, dass mehrere Schnittbilder der Probe aufgenommen werden können und die Probe zwischen den Aufnahmen gedreht und/oder verschoben werden kann, und wobei die Auswerteeinheit zur Registrierung und Fusionierung der aufgenommenen Schnittbilder zu einem ersten Datensatz von räumlichen Bilddaten ausgelegt ist.

Ein solches Verfahren bzw. eine solche optische Anordnung ist bzgl. der Beobachtung der Probe insbesondere im Zusammenhang mit der *Single-Plane-Illumination*-Mikroskopie (SPIM), auch als *Selective-Plane-Illumination*-Mikroskopie bezeichnet, anwendbar. Während mit der konfokalen Laser-Scanning-Mikroskopie die Probe in mehreren unterschiedlich tiefen Ebenen Punkt für Punkt abgetastet wird und daraus dreidimensionale Bildinformationen der Probe gewonnen werden, so beruht die SPIM-Technologie auf der Weitfeldmikroskopie und ermöglicht die dreidimensionale bildliche Darstellung von Proben auf der Grundlage von optischen Schnitten durch verschiedene Ebenen der Probe.

Dabei bestehen die Vorteile der SPIM-Technologie u.a. in der größeren Geschwindigkeit, mit der die Bilderfassung erfolgt, einem geringerem Ausbleichen von biologischen Proben, sowie einer erweiterten Eindringtiefe des Fokus in die Probe.

Prinzipiell werden bei der SPIM-Technologie Fluorophore, die in der Probe enthalten oder in die Probe eingebracht sind, mit Laserlicht angeregt, das zu einem sogenannten Lichtblatt geformt ist, bzw. auf eine Weise über die Probe geführt wird, daß sich effektiv, d.h. über den Zeitraum der Beobachtung die Form eines Lichtblattes ergibt. Dabei wird mit jeweils einem Lichtblatt eine Ebene in der Tiefe der Probe beleuchtet, mittels dieser Beleuchtung wird ein Bild der Probe in dieser Ebene gewonnen. Wesentlich ist, daß Elemente in der Lichtblattebene auf die Ebene des Detektors, der Teil der Detektierungseinrichtung ist, abgebildet werden, bzw. daß Lichtblatt- und Detektorebene zueinander konjugiert sind. In herkömmlichen Mikroskopaufbauten, in denen die Detektorebene senkrecht zur optischen Achse des Detektierungsstrahlengangs liegt, steht die Richtung, in der Licht detektiert wird, senkrecht oder zumindest nahezu senkrecht auf der Ebene, in der beleuchtet wird.

Die SPIM-Technologie ist beispielsweise in Stelzer et al., Optics Letter 31,1477 (2006), in Stelzer et al., Science 305, 1007 (2004), in der DE 10257423A1 und in der WO 2004/0530558A1 beschrieben. WO 2007/065711 A1 beschreibt eine rotierbare und verschiebbare Probenhalterung In WO 2005/050588 wird eine tomographische Einrichtung beschrieben bei der Schattenbilder (" shadowgrams") aufgenommen werden.

Ein anderes Verfahren, mit dem räumliche Bilder einer Probe gewonnen werden können, ist die sogenannte optische Projektions-Tomographie (OPT). Mit diesem Verfahren lassen sich auch dickere Proben als mit der SPIM-Technologie untersuchen, ohne jedoch auf gängige Einfärbungen der Probe mit Farbstoffen verzichten zu müssen. Eine tomographische Einrichtung umfaßt im wesentlichen ein Beleuchtungs- und Abbildungssystem - beispielsweise ein Lichtmikroskop -, eine Detektierungseinrichtung - in der Regel eine CCD-Kamera - und eine Auswerteeinheit, in der die aufgenommenen Bilder zu einem räumlichen Bild zusammengesetzt werden. Wie bei anderen tomographischen Verfahren auch muß die Probe gedreht werden, und es müssen eine Vielzahl von Bildern bei verschiedenen Winkeln aufgenommen werden, aus denen dann das Gesamtbild mittels eines Rekonstruktionsverfahrens erzeugt wird. Je mehr Bilder aufgenommen werden, desto höher ist die Genauigkeit. Zwischen zwei Bildern wird die Probe daher nur um einen kleinen Betrag, beispielsweise einen Winkel von 1° gedreht. Die Probe wird im Durchlicht beleuchtet, beispielsweise mit UV-Licht oder Weißlicht. Als Lichtquellen lassen sich punktförmige Lichtquellen mit einem entsprechenden Öffnungswinkel verwenden, so daß ein Lichtkegel auf das Objekt geworfen wird. Auch flächige Lichtquellen, d.h. Lichtquellen, die Licht über eine große Fläche verteilt abstrahlen, lassen sich verwenden, wenn die Lichtstrahlen der Quelle parallel auf die Probe treffen. Dies entspricht einer im unendlichen angeordneten Punktlichtquelle. Die Probe wird dann näherungsweise einer orthogonalen Parallelprojektion entsprechend auf den Detektor projiziert. Die optische Achse des Beleuchtungsstrahlengangs beim Auftreffen auf die Probe verläuft senkrecht zur Rotationsachse der Probe. Licht, das von einem senkrecht zur Rotationsachse der Probe liegenden Schnitt emittiert wird, wird durch die Abbildungsoptik auf genau eine Zeile des CCD-Detektors abgebildet. Da jedoch die gesamte Probe beleuchtet wird, wird im Gegensatz zur konfokalen Mikroskopie auch die gesamte Probe auf den Detektor projiziert. Beim Weg durch die Probe wird das Licht durch Absorption oder Streuung gedämpft, so daß das projizierte Bild der Probe einem Schattenbild entspricht, ähnlich wie beispielsweise klassische Röntgenbilder. Der Fokusbereich der Abbildungsoptik hat die Form eines Doppelkegels, deren Spitzen sich berühren. Er wird in der Regel nicht in das Zentrum der Probe gelegt, sondern entlang der optischen Achse in ihre vordere Hälfte, da der Schärfe-Doppelkegel nicht symmetrisch ist, sondern nur ein Drittel der Schärfentiefe im vorderen Bereich und zwei Drittel im hinteren Bereich liegen. Durch die Verschiebung des Fokalpunktes kann die Probe im ganzen auf diese Weise schärfer abgebildet werden.

Gegenüber anderen etablierten mikroskopischen Verfahren, auch gegenüber der SPIM-Technologie lassen sich mit OPT auch Proben mit einer Dicke von etwa bis zu 15mm erfassen. Eine Beobachtung ist sowohl im Hell- als auch im Dunkelfeld möglich, was auch die Färbung der Probe mit anderen Farbstoffen als Fluorophoren möglich macht. Die Auflösung ist allerdings geringer als bei der konfokalen Mikroskopie.

Die Methode der optischen Projektionstomographie ist beispielsweise in J. Sharpe et al., Science 296, 541 (2002), WO 2004/020996 und WO 2004/020997A1 beschrieben.

Im Gegensatz zur OPT-Technologie ist jedoch die SPIM-Technologie anfälliger gegenüber Effekten, die durch die Streuung und Absorption von Licht hervorgerufen werden. Bei SPIM-Bildern machen sich diese Artefakte beispielsweise als Streifen bemerkbar.

Aufgabe der Erfindung ist es daher, ein Verfahren und eine optische Anordnung der eingangs beschriebenen Art dahingehend weiterzuentwickeln, daß die Wirkung dieser Effekte bei der räumlichen Darstellung der Probe vermindert werden kann.

Diese Aufgabe wird bei einem Verfahren der eingangs beschriebenen Art dadurch gelöst, daß die Probe über eine zweite Beleuchtungseinrichtung im Durchlicht im wesentlichen senkrecht zur Rotationsachse beleuchtet wird, wobei das Abbildungsobjektiv mindestens einen Teil der Probe näherungsweise zentral als Schattenbild auf die Detektierungseinrichtung projiziert, wobei mehrere Schattenbilder der Probe aufgenommen werden und mindestens für einen Teil der Schattenbilder die Probe zwischen den Aufnahmen gedreht und/oder verschoben wird. Aus den aufgenommenen Schattenbildern wird mittels eines Rückprojektionsalgorithmus dann ein zweiter Datensatz von räumlichen Bilddaten der Probe konstruiert.

Es handelt sich also bei dem erfindungsgemäßen Verfahren im wesentlichen um eine Kombination der beiden Verfahren SPIM und OPT, durchgeführt an derselben Probe. Da in beiden Fällen die Probe rotiert werden muß um einen mehr oder weniger kompletten Datensatz zu erhalten, lassen sich im wesentlichen die gleichen Aufbauten verwenden, wobei die Beleuchtungs- und/oder Abbildungseinstellungen jeweils an das gewählte Verfahren angepaßt werden. Aufgrund der mit OPT gewonnenen Daten ist es möglich, Artefakte im SPIM-Bild, d.h. dem ersten Datensatz, leichter zu identifizieren. Dies vermindert die Anfälligkeit gegenüber Fehlinterpretationen.

Beide Verfahren lassen sich auch im wesentlichen parallel durchführen. Für die Erzeugung eines OPT-Datensatzes muß die Probe in kleinen Schritten von 1° oder weniger vollständig um 360° rotiert werden, jedoch nicht translatiert. Im Gegensatz dazu muß die Probe bei SPIM-Verfahren nicht oder nur um wenige Stellungen rotiert werden, allerdings muß sie translatiert werden, wenn nicht die Optiken entsprechend verschoben werden. Aufnahmen bei vier Winkelstellungen, die sich jeweils um 90° voneinander unterschieden, reichen im Allgemeinen aus. Für jede Winkelstellung bzgl. der Rotation ist es notwendig, entlang der Rotationsachse verschiedene Schnittbilder aufzunehmen, da sich ansonsten ein dreidimensionales Bild nur für einen einzigen Schnitt erzeugen ließe, was selbstverständlich auch möglich ist.

Mit dem eben beschriebenen Verfahren lassen sich zwar Artefakte im SPIM-Bild erkennen, jedoch nicht beseitigen. Dies wird allerdings möglich, wenn erster und zweiter Datensatz mittels eines Registrierungsalgorithmus zu einem gemeinsamen Datensatz von räumlichen Bilddaten fusioniert werden. Erster Datensatz und zweiter Datensatz werden also in ein gemeinsames Koordinatensystem transformiert und können auf diese Weise bei der Darstellung in einem räumlichen Bild einander überlagert werden. Auch ist es möglich, beispielsweise die Daten der OPT-Aufnahmen dazu zu benutzen, die Artefakte im Bild der SPIM-Aufnahme, die eine höhere Auflösung besitzt, rechnerisch zu beseitigen. Dabei kann ausgenutzt werden, daß beide Verfahren mit unterschiedlichen Beleuchtungswellenlängen arbeiten können. So kann mit der SPIM-Beleuchtung beispielsweise die Fluoreszenz von in der Probe enthaltenen Farbstoffen angeregt werden, die OPT-Beleuchtung kann jedoch auch im infraroten Wellenlängenbereich liegen. Die Wahl dieses Wellenlängenbereichs bietet den Vorteil, daß das Licht einfacher in die Probe eindringen kann und weniger Streuverluste auftreten. Der so erhaltene zweite Datensatz läßt sich dann als vereinheitlichter Markierungskanal für die SPIM-Fluoreszenzmessung verwenden. Selbstverständlich kann die Probe im OPT-Verfahren auch mit Licht beleuchtet werden, welches Fluoreszenz anregt, beispielsweise mit Licht der gleichen Wellenlänge wie im SPIM-Verfahren. Hier kann dann die gleiche Lichtquelle verwendet werden. Obwohl das Ausbleichen der Probe in diesem Fall stärker ist und auch Streuverluste höher sein können, kann der zweite Datensatz dennoch verwendet werden, um ein vollständiges Bild der Probe zu rekonstruieren, da der zweite Datensatz trotz niedriger Auflösung ein höhere Integrität aufweist.

Mit der zweiten Beleuchtungseinrichtung kann die Probe beispielsweise mit einer Lichtquelle flächig beleuchtet werden, d.h. mit einer Lichtquelle, deren Abstrahlfläche beispielsweise so groß ist, daß die ganze Probe davon erfaßt wird. Dies ist vorteilhaft für die Erzeugung eines Projektionsbildes. Auch Punktlichtquellen mit einem Öffnungswinkel, bzw. Abstrahllichtkegel sind für die flächige Beleuchtung verwendbar, wobei das Schattenbild gegenüber der tatsächlichen Größe der Probe vergrößert projiziert wird, je nachdem wie nahe sich die Punktlichtquelle an der Probe befindet, da es sich um eine Zentralprojektion handelt. Bei der flächigen Beleuchtung hingegen wird eine - punktförmige - Lichtquelle simuliert, die sich in unendlicher Entfernung zum Objekt befindet, so daß die Strahlen parallel auf die Probe treffen und die Probe als Parallelprojektion - eine Sonderform der Zentralprojektion - auf die Detektierungseinrichtung projizieren. Im Falle der Parallelprojektion ist die Projektion darüber hinaus orthogonal, da Projektionsrichtung und Detektierungsebene senkrecht zueinander stehen.

Die zweite Beleuchtungseinrichtung kann die Probe allerdings auch mit einer Punktlichtquelle konfokal beleuchten, wobei das Licht der Punktlichtquelle die Probe bevorzugt punktweise abtastet. Aufgrund der Projektion wird Licht nur in dem Pixel beispielsweise einer CCD-Kamera registriert, welches - parallel zur optischen Achse - der aktuellen Position des Lichtpunktes entspricht. Auf diese Weise lassen sich durch Streuung auftretende Effekte ganz oder zumindest nahezu vollständig vermeiden.

Diese Aufgabe wird außerdem für eine optische Anordnung der eingangs beschriebenen Art dadurch gelöst, daß eine zweite Beleuchtungseinrichtung mit einem zweiten Beleuchtungsstrahlengang zur Beleuchtung der Probe im Durchlicht im wesentlichen senkrecht zur Ebene des Lichtblatts um im wesentlichen senkrecht zur Rotationsachse vorgesehen ist, wobei die zweite Beleuchtungseinrichtung und die Abbildungsoptik so aufeinander abgestimmt sind, daß mindestens ein Teil der Probe näherungsweise als Schattenbild auf die Detektierungseinrichtung projiziert wird. Die Steuereinheit ist dabei zur Steuerung außerdem so ausgelegt, daß mehrere Schattenbilder der Probe aufgenommen werden und mindestens für einen Teil der Schattenbilder die Probe zwischen den Aufnahmen gedreht und/oder verschoben wird. In der Auswerteeinheit ist ein Rückprojektionsalgorithmus implementiert, mittels dessen aus den aufgenommenen Schattenbildern ein zweiter Datensatz von räumlichen Bilddaten der Probe konstruierbar ist.

Diese Anordnung ist zur Umsetzung des oben beschriebenen Verfahrens geeignet. Aufgrund der Tatsache, daß sowohl SPIM-Verfahren - dieses optional - als auch OPT-Verfahren eine Rotation der Probe erfordern, sowie aufgrund der Tatsache, daß die erste Beleuchtungseinrichtung die Probe im wesentlichen senkrecht in bezug auf die Richtung der Detektierungsachse beleuchtet, Licht der zweiten Beleuchtungseinrichtung, der OPT-Beleuchtung, jedoch parallel zur optischen Achse des Abbildungsobjektivs, ist eine Integration in ein gemeinsames System ohne großen Aufwand und ohne wesentliche Mehrkosten, beispielsweise in Form eines zusätzlichen Moduls, möglich. Zusätzlich muß auch noch der entsprechende Rückprojektionsalgorithmus implementiert werden.

Dabei ist es möglich, für die erste Beleuchtungseinrichtung, d.h. die SPIM-Beleuchtung und für die zweite Beleuchtungseinrichtung, d.h. die OPT-Beleuchtung, verschiedene Beleuchtungslichtquellen zu verwenden, also im zweiten Beleuchtungsstrahlengang eine zweite Beleuchtungslichtquelle vorzusehen. In diesem Fall kann beispielsweise als erste Beleuchtungslichtquelle ein Laser, der Fluoreszenz anregt, verwendet werden, und als zweite Beleuchtungslichtquelle Weißlicht oder Infrarotlicht. Allerdings ist es ebenso möglich und durch entsprechende Anwendungen nahegelegt, dieselbe Beleuchtungslichtquelle(n) für das SPIM und OPT zu verwenden, die dann entsprechend durch Strahlteiler aufgeteilt werden. Darüber hinaus können SPIM- und OPT-Beobachtungen auch gleichzeitig durchgeführt werden, ggf. auch mit der gleichen Lichtquelle. Verwendet man einen Laser als erste Beleuchtungslichtquelle, so läßt sich das Lichtblatt auch effektiv durch das Führen von Laserlicht über die Probe während des Bearbeitungszeitraums formen.

In einer bevorzugten Ausgestaltung der optischen Anordnung ist die zweite Beleuchtungslichtquelle als Punktlichtquelle ausgestaltet. Dabei kann die Punktlichtquelle zum einen so ausgestaltet sein, daß sie einen gewissen Öffnungskegel aufweist, der die Probe vollständig beleuchtet und sie zentral auf die Detektierungseinrichtung projiziert. Es ist zum anderen jedoch auch möglich, die Punktlichtquelle konfokal auszugestalten, so daß nur ein Punkt in der Probe beleuchtet wird. In diesem Fall sind bevorzugt auch Mittel zur rasterförmigen Abtastung der Probe durch die Punktlichtquelle vorgesehen.

In einer anderen bevorzugten Ausgestaltung der optischen Anordnung ist die zweite Beleuchtungslichtquelle flächenförmig ausgestaltet. Die Probe wird dann parallel und orthogonal auf die Detektierungseinrichtung projiziert. In diesem Fall kann die Beleuchtungslichtquelle beispielsweise als Array von weißen LED ausgestaltet sein. Auch die Verwendung von Anregungslicht, welches durch Verwendung einer Streuscheibe gestreut wird, ist denkbar.

Bevorzugt weist die Abbildungsoptik in einer Pupillenebene Mittel zur Einstellung der Schärfentiefe, bevorzugt umfassend ein Blendenrad oder eine Irisblende auf. Dies ist insbesondere dann von Vorteil, wenn Abbildungssysteme mit einer hohen numerischen Apertur verwendet werden, die eine geringe Schärfentiefe aufweisen. So arbeiten zwar auch SPIM-Systeme in der Regel mit niedrigen numerischen Aperturen in der Größenordnung von 0,2, bei OPT-Systemen ist es jedoch vorteilhafter, mit numerischen Aperturen von weniger als 0,1 zu arbeiten, da die Fokustiefe auf diese Weise erhöht wird. Grundsätzlich ist auch die Verwendung von Linsensystemen mit hoher numerischer Apertur, insbesondere auch im SPIM-System möglich. Um jedoch beim Umschalten von einer SPIM-Messung auf eine OPT-Messung nicht das Objektiv wechseln zu müssen - was selbstverständlich geht, wenn die Objektive beispielsweise auf einem Revolver angeordnet sind - bietet sich die Verwendung eines Blendenrades oder einer Irisblende an, die beispielsweise beim Wechsel der Beleuchtung von SPIM zu OPT und umgekehrt entsprechend angesteuert werden können um die Abbildungsoptik an die jeweilige Beobachtungsmethode anzupassen.

In einer besonders bevorzugten Ausführung der Erfindung ist in der Auswerteeinheit außerdem ein Registrierungsalgorithmus implementiert, mittels dessen der erste und der zweite Datensatz zu einem gemeinsamen Datensatz von räumlichen Bilddaten fusioniert werden können. Auf diese Weise ist es nicht nur möglich, beispielsweise Artefakte in den SPIM-Bildern zu erkennen, sondern sie auch entsprechend zu korrigieren. Auch eine einfache Überlagerungsdarstellung beider Bilddatensätze ist selbstverständlich möglich, wenn sie in das gleiche Koordinatensystem transformiert sind.

Die Erfindung soll im folgenden anhand von Ausführungsbeispielen näher erläutert werden. In den zugehörigen Zeichnungen, die auch erfindungswesentliche Merkmale enthalten, zeigt
- Fig.1: den grundlegenden Aufbau einer optischen Anordnung zur Untersuchung einer Probe,
- Fig.2: die Beleuchtung der Probe mit einer flächig abstrahlenden Lichtquelle im Detail, und
- Fig.3: die Beleuchtung der Probe mit einer Punktlichtquelle im Detail.

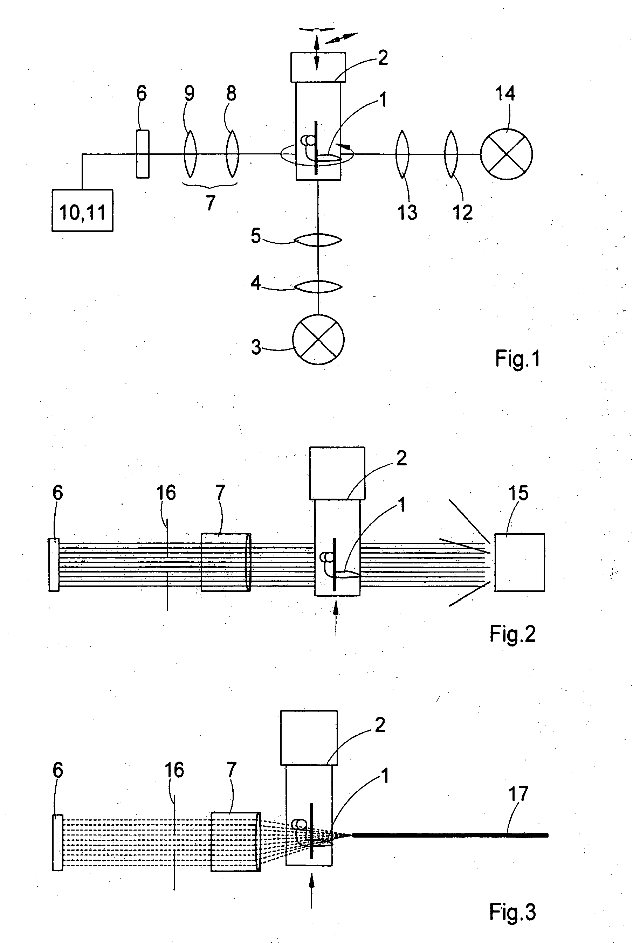

In Fig.1 ist zunächst der grundlegende Aufbau einer optischen Anordnung zur Untersuchung einer Probe 1 dargestellt. Die Probe 1 befindet sich in einer Probenhalterung 2. Die Probe 1 kann beispielsweise in einem Gelzylinder aus Agarose eingebettet sein. Die Probenhalterung 2 weist bevorzugt ein zylindrisches Gefäß auf, in dem der Agarosezylinder gehalten wird. Die Probenhalterung 2 ist verschiebbar gelagert und zwar in allen drei Raumrichtungen, wie durch die Doppelpfeile angedeutet. Außerdem ist sie noch um ihre Rotationsachse rotierbar gelagert, wie durch den kreisförmigen Pfeil angedeutet. Anstelle der Probenhalterung 2 kann auch die Probe 1 selbst rotierbar und verschiebbar gelagert sein.

Die Anordnung umfaßt eine erste Beleuchtungseinrichtung mit einer ersten Beleuchtungslichtquelle 3 und einem ersten Beleuchtungsstrahlengang, dargestellt durch zwei Linsen 4 und 5. Über den ersten Beleuchtungsstrahlengang wird Licht von der ersten Beleuchtungslichtquelle 3 auf die Probe 1 gelenkt. Die Beleuchtungseinrichtung ist dabei so ausgestaltet, daß sie die Probe 1 mit einem im wesentlichen ebenen Lichtblatt, welches im wesentlichen parallel zur Rotationsachse ausgerichtet ist, beleuchtet.

Die Anordnung umfaßt außerdem eine Detektierungseinrichtung zur Detektierung von Licht, das von der Probe 1 abgestrahlt wird. Die Detektierungseinrichtung wird im vorliegenden Fall durch einen CCD-Kamera 6, die Licht flächenförmig detektiert, symbolisiert. Die Kamera muß dabei nicht unbedingt einen CCD-Detektor aufweisen, auch CMOS-Detektoren sind verwendbar, oder andere Detektoren, mit denen Licht pixelweise, d.h. in Punkten detektiert werden kann.

Darüber hinaus umfaßt die Anordnung auch eine Abbildungsoptik, welche die Probe 1 über ein Abbildungsobjektiv 7 in einem Abbildungsstrahlengang mindestens teilweise auf die Detektierungseinrichtung abbildet. Die erste Beleuchtungseinrichtung ist so ausgelegt, daß mit ihr die Probe 1 gemäß der Vorgaben einer SPIM-Analyse beleuchtet werden kann. Das Lichtblatt ist im Fokus des Abbildungsobjektivs 7 daher im wesentlichen eben, das Abbildungsobjektiv 7 weist darüber hinaus eine optische Achse auf, welche die Ebene des Lichtblattes in einem von Null verschiedenen Winkel, bevorzugt senkrecht schneidet. Licht, das aufgrund der Beleuchtung der Probe 1 mit der ersten Beleuchtungseinrichtung detektiert wird, wird somit als Schnittbild detektiert.

Schließlich umfaßt die Anordnung auch eine Steuereinheit 10 und eine Auswerteeinheit 11, wobei die Steuereinheit 10 zu einer Steuerung derart ausgelegt ist, daß mehrere Schnittbilder der Probe 1 aufgenommen werden können und die Probe 1 zwischen den Aufnahmen gedreht und/oder verschoben werden kann, und wobei die Auswerteeinheit 11 zur Registrierung und Positionierung der aufgenommenen Schnittbilder zu einem ersten Datensatz von räumlichen Bilddaten ausgelegt ist.
Bei einer typischen SPIM-Analyse wird in jeder Winkelstellung eine Vielzahl von Schnittbildern aufgenommen, zwischen zwei Aufnahmen wird die Probe 1 nicht rotiert, jedoch senkrecht zur Rotationsachse entlang der optischen Achse des Abbildungsobjektivs 7 verschoben. Nachdem ein erster solcher Satz von Schnittbildern fertiggestellt ist, wird die Probe 1 beispielsweise um 90° - auch beliebige andere Rotationswinkel sind bei SPIM-Analysen selbstverständlich einstellbar - gedreht, bevor der nächste Satz von Schnittbildern aufgenommen wird. Winkelstellungen und absolute Positionen im Koordinatensystem bei der Verschiebung werden von der Steuereinheit 10 eingestellt und für jedes Schnittbild registriert, so daß die Auswerteeinheit 11 darauf zugreifen kann. In dieser werden die Sätze von Schnittbildern registriert, d.h. in ein gemeinsames Koordinatensystem transformiert. Anschließend werden sie zu einem ersten Datensatz von räumlichen Bildern fusioniert.

Zusätzlich zur Beobachtung und Analyse gemäß der SPIM-Methode läßt sich die Probe 1 auch mit der OPT-Methode, mit optischer Projektionstomographie untersuchen. Dazu weist die Anordnung eine zweite Beleuchtungseinrichtung mit einem zweiten Beleuchtungsstrahlengang, dargestellt durch zwei Linsen 12 und 13, zur Beleuchtung der Probe 1 im Durchlicht im wesentlichen senkrecht zur Ebene des Lichtblatts und im wesentlichen senkrecht zur Rotationsachse auf. Zweite Beleuchtungseinrichtung und Abbildungsoptik sind dabei so aufeinander abgestimmt, daß mindestens ein Teil der Probe näherungsweise zentral als Schattenbild auf die Detektierungseinrichtung, d.h. die CCD-Kamera 6 projiziert wird.

Die zweite Beleuchtungseinrichtung der Anordnung, wie sie in Fig.1 gezeigt ist, weist eine eigene zweite Beleuchtungslichtquelle 14 auf. Selbstverständlich ist es auch möglich, Licht der ersten Beleuchtungslichtquelle 3 zur Beleuchtung des zweiten Beleuchtungsstrahlengangs zu verwenden, wenn die Applikationen und die von der ersten Beleuchtungslichtquelle 3 abgestrahlten Wellenlängen bzw. Wellenlängenbereiche dies erlauben. Entsprechend sind dann beispielsweise Strahlteiler vorzusehen. Die zweite Beleuchtungslichtquelle 14 kann als flächenförmige Lichtquelle ausgestaltet sein, so daß die gesamte Probe mit parallelen Licht wie von einer unendlich entfernten Punktlichtquelle bestrahlt wird. Als Spezialfall einer Zentralprojektion wird die Probe 1 dann parallel und orthogonal auf die Detektierungseinrichtung projiziert. In einer anderen Ausgestaltung kann die zweite Beleuchtungslichtquelle 14 auch als Punktlichtquelle ausgestaltet sein. Die Probe 1 oder zumindest ein Teil von ihr wird dann vergrößert auf die CCD-Kamera 6 abgebildet.

Die Steuereinheit 10 ist dabei zur Steuerung so ausgelegt, daß mehrere Schattenbilder der Probe 1 aufgenommen werden und mindestens für einen Teil der Schattenbilder die Probe 1 zwischen den Aufnahmen gedreht und/oder verschoben wird. In der Auswerteeinheit 11 ist außerdem ein Rückprojektionsalgorithmus implementiert, mittels dessen aus den aufgenommenen Schattenbildern ein zweiter Datensatz von räumlichen Bilddaten der Probe konstruiert werden kann.

Der Vorteil dieser Kombination von SPIM- und OPT-Methode liegt darin, daß sich bei der Probenuntersuchung genauere Ergebnisse erzielen lassen. Beispielsweise machen sich Bereiche in der Probe 1, die im hohen Maße Licht absorbieren oder streuen, in den SPIM-Bildern als Streifen bemerkbar. Die mit OPT erzeugten Bilder haben zwar eine geringere Auflösung, werden jedoch nicht nur bei wenigen Winkeln wie im Falle der SPIM-Analyse, sondern bei vielen Winkeln aufgenommen. Die Probe 1 wird beispielsweise zwischen den Aufnahmen zweier Schattenbilder nur um einen Winkel von weniger als 1° gedreht. Aufgrund der Analyse der OPT-Bilder lassen sich die oben genannten Artefakte leichter erkennen.

Darüber hinaus ist es auch möglich, daß in der Auswerteeinheit 11 ein Registrierungsalgorithmus implementiert ist, mittels dessen der erste und der zweite Datensatz zu einem gemeinsamen Datensatz von räumlichen Bilddaten fusioniert werden können. Auf diese Weise kann man auf einen Vergleich der beiden Bilder verzichten, da die Ergebnisse beider Untersuchungen in einem einzigen Bilddatensatz, der als perspektivisches, räumliches Bild auf einem Bildschirm dargestellt werden kann; enthalten sind. Alternativ oder in Ergänzung können die Daten des OPT-Bilddatensatzes auch dazu benutzt werden, die Daten des SPIM-Datensatzes zu korrigieren.

In Fig.2 ist die Anordnung aus Fig.1 teilweise im Detail dargestellt. Als zweite Beleuchtungslichtquelle 14 ist hier eine Flächenlichtquelle 15 vorgesehen, wodurch eine unendlich entfernte Punktlichtquelle simuliert werden kann. Auf die Darstellung der Linsen 12 und 13 wurde der Übersichtlichkeit halber verzichtet, ebenso auf die Darstellung der ersten Beleuchtungseinrichtung, deren Licht von unten als Lichtblatt auf die Probe 1 gelenkt wird. Das Lichtblatt selbst ist als schwarzer Balken, der die Probe 1 schneidet dargestellt. Auch auf eine Darstellung der Auswerteeinheit 11 und der Steuereinheit 10 wurde verzichtet. Das Abbildungsobjektiv 7 weist in der Regel eine niedrige numerische Apertur auf, die Eindringtiefe des Fokus wird an die Probengröße angepaßt. Verwendet man ein Abbildungsobjektiv 7 mit hoher numerischer Apertur und geringer Schärfentiefe, so kann die numerische Apertur verkleinert und die Schärfentiefe verbessert werden, in dem man in einer Pupillenebene ein Blendenrad oder eine Irisblende 16 einbringt. Auf diese Weise wird die effektive Größe des Detektors verändert und der Anteil des detektierten Streulichts kann geregelt werden.

Alternativ kann die Probe auch, wie in Fig.3 gezeigt, mit einer Punktlichtquelle 17 bestrahlt werden. Es ergibt sich dann eine klassische Zentralprojektion. Die Punktlichtquelle kann aber, bei entsprechender Ausstattung des Öffnungswinkels und konfokaler Abbildung auf die Probe 1 auch dazu verwendet werden, die Probe 1 punktweise abzutasten um ein Bild zu erzeugen, welches nahezu keinen Einfluß von gestreutem Licht aufweist, indem nur Licht an der Stelle der CCD-Kamera 6 detektiert wird, die der aktuellen Position der Punktlichtquelle senkrecht zur optischen Achse entspricht. In diesem Fall können die SPIM-Daten auch dazu verwendet werden, die OPT-Rekonstruktion zu verbessern, indem beispielsweise SPIM-Bilder an den entsprechenden Stellen aufgenommen werden, die vom OPT-System gerade beleuchtet werden. Die konfokale OPT-Abtastung läßt sich auch dazu verwenden, die Streuung fluoreszenten Lichts bei SPIM-Aufnahmen abzuschätzen und letztendlich auch die streifenförmigen Artefakte zu korrigieren, in dem beispielsweise beide Bilddatensätze wie oben beschrieben zusammengefügt werden.

Bei einer Beleuchtung mit einer Punktlichtquelle 17 besteht darüber hinaus der Vorteil, daß höhere numerische Aperturen beim Abbildungsobjektiv 7 verwendet werden können. Auf diese Weise kann eventuelle Schaden, den die Beleuchtung bei der Probe 1 erzeugt, vermindert werden, da die Beleuchtungsintensität geringer gehalten werden kann. Außerdem können handelsübliche Lasermodule mit Glasfasern, an deren Ende das Licht nahezu punktförmig austritt, als Lichtquellen verwendet werden. Schließlich kann zwischen der Punktlichtquelle 17 und der Probe 1 auch eine zusätzliche Blende eingebracht werden, um beispielsweise die Untersuchung auf ein besonders interessantes Gebiet der Probe 1 zu beschränken, ohne den restlichen Teil der Probe 1 zu beschädigen.

### Bezugszeichenliste

- 1: Probe
- 2: Probenhalterung
- 3: erste Beleuchtungslichtquelle
- 4, 5: Linsen
- 6: CCD-Kamera
- 7: Abbildungsobjektiv
- 8, 9: Linse
- 10: Steuerheit
- 11: Auswerteeinheit
- 12, 13: Linsen
- 14: zweite Beleuchtungslichtquelle
- 15: Flächenlichtquelle
- 16: Irisblende
- 17: Punktlichtquelle

## Patentansprüche

1. Verfahren zur Untersuchung einer Probe (1) geeignet zur Simple-Plane-Illumination-Mikroskopie und optischen Projektions-Tomographie, bei dem
- die Probe (1) um eine Rotationsachse rotierbar und verschiebbar gelagert wird,
- die Probe (1) über eine erste Beleuchtungseinrichtung mit einem im wesentlichen ebenen Lichtblatt im wesentlichen parallel zur Rotationsachse beleuchtet wird, und von der Probe abgestrahltes Licht über ein Abbildungsobjektiv (7) mit einer optischen Achse, welche die Ebene des Lichtblatts in einem von Null verschiedenen Winkel, bevorzugt senkrecht, schneidet, auf eine Detektierungseinrichtung als Schnittbild abgebildet wird,
- mehrere Schnittbilder der Probe (1) aufgenommen werden und mindestens für einen Teil der Schnittbilder die Probe (1) zwischen den Aufnahmen gedreht und/oder verschoben wird,
- und die aufgenommenen Schnittbilder registriert und zu einem ersten Datensatz von räumlichen Bilddaten der Probe (1) fusioniert werden, wobei
- die Probe (1) über eine zweite Beleuchtungseinrichtung im Durchlicht im wesentlichen senkrecht zur Rotationsachse beleuchtet wird, wobei das Abbildungsobjektiv (7) mindestens einen Teil der Probe (1) näherungsweise zentral als Schattenbild auf die Detektierungseinrichtung projiziert,
- wobei mehrere Schattenbilder der Probe (1) aufgenommen werden und mindestens für einen Teil der Schattenbilder die Probe (1) zwischen den Aufnahmen gedreht und/oder verschoben wird,
- aus den aufgenommenen Schattenbildern mittels eines Rückprojektionsalgorithmus ein zweiter Datensatz von räumlichen Bilddaten der Probe (1) konstruiert wird.

2. Verfahren nach Anspruch 1, **dadurch gekennzeichnet, daß** der erste und zweite Datensatz mittels eines Registrierungsalgorithmus zu einem gemeinsamen Datensatz von räumlichen Bilddaten fusioniert werden.

3. Verfahren nach einem der Ansprüche 1 oder 2, **dadurch gekennzeichnet, daß** die zweite Beleuchtungseinrichtung die Probe (1) flächig beleuchtet.

4. Verfahren nach Anspruch 3, **dadurch gekennzeichnet, daß** die zweite Beleuchtungseinrichtung die Probe (1) konfokal punktförmig beleuchtet und die Probe (1) punktweise abtastet.

## Claims

1. Method for analysing a sample (1) suitable for single-plane illumination microscopy and optical projection tomography in the case of which
- the sample (1) is mounted rotatably about and displaceably along an axis of rotation,
- the sample (1) is illuminated via a first illumination device having a substantially flat light sheet in a fashion substantially parallel to the axis of rotation and, via an imaging objective (7) with an optical axis which intersects the plane of the light sheet at an angle other than zero, preferably perpendicularly, light emitted by the sample is projected onto a detection device as a sectional image,
- a plurality of sectional images of the sample (1) are recorded and, at least for some of the sectional images, the sample (1) is turned and/or displaced between the recordings,
- and the sectional images recorded are registered and fused into a first data record of spatial image data of the sample (1),
- the sample (1) being illuminated in transmitted light substantially perpendicular to the axis of rotation via a second illumination device, the imaging objective (7) projecting at least a portion of the sample (1) as shadow image onto the detection device in an approximately central fashion,
- a plurality of shadow images of the sample (1) being recorded and the sample (1) being turned and/or displaced between the recordings at least for some of the shadow images, and
- a back projection algorithm being used to construct from the shadow images recorded a second data record of spatial image data of the sample (1).

2. Method according to Claim 1, **characterized in that** the first and second data records are fused into a common data record of spatial image data by means of a registration algorithm.

3. Method according to either of Claims 1 and 2, **characterized in that** the second illumination device illuminates the sample (1) in two dimensions.

4. Method according to Claim 3, **characterized in that** the second illumination device illuminates the sample (1) confocally in punctiform fashion and scans the sample (1) in punctiform fashion.

## Revendications

1. Procédé pour l'analyse d'un échantillon (1) approprié pour la microscopie par illumination à plan unique et la tomographie par projection optique, dans lequel
- l'échantillon (1) est disposé de manière à pouvoir être mis en rotation autour d'un axe de rotation et déplacé,
- l'échantillon (1) est éclairé par l'intermédiaire d'un premier dispositif d'éclairage par une lame de lumière sensiblement plane de manière sensiblement parallèle à l'axe de rotation, et la lumière rayonnée par l'échantillon est soumise à une formation d'image sur un dispositif de détection sous la forme d'une image en coupe par l'intermédiaire d'un objectif de formation d'image (7) ayant un axe optique qui coupe le plan de la lame de lumière sous un angle différent de zéro, de préférence perpendiculairement,
- de multiples images en coupe de l'échantillon (1) sont acquises et au moins pour une partie des images en coupe, l'échantillon (1) est mis en rotation et/ou déplacé entre les acquisitions,
- et les images en coupe acquises sont enregistrées et fusionnées en un premier ensemble de données constitué de données d'images spatiales de l'échantillon (1), dans lequel
- l'échantillon (1) est éclairé par l'intermédiaire d'un second dispositif d'éclairage en lumière transmise sensiblement perpendiculairement à l'axe de rotation, dans lequel l'objectif de formation d'image (7) projette sur le dispositif de détection au moins une partie de l'échantillon (1) de manière approximativement centrale sous la forme d'une silhouette,
- dans lequel de multiples silhouettes de l'échantillon (1) sont acquises et au moins pour une partie des silhouettes, l'échantillon (1) est mis en rotation et/ou déplacé entre les acquisitions,
- un second ensemble de données constitué de données d'images spatiales de l'échantillon (1) est construit à partir des silhouettes acquises au moyen d'un algorithme de rétroprojection.

2. Procédé selon la revendication 1, **caractérisé en ce que** les premier et second ensembles de données sont fusionnés au moyen d'un algorithme d'alignement en un ensemble de données commun constitué de données d'images spatiales.

3. Procédé selon l'une quelconque des revendications 1 ou 2, **caractérisé en ce que** le second dispositif d'éclairage éclaire l'échantillon (1) de manière bidimensionnelle.

4. Procédé selon la revendication 3, **caractérisé en ce que** le second dispositif d'éclairage éclaire l'échantillon (1) de manière confocale et ponctuelle et balaye l'échantillon (1) de manière ponctuelle.
